# EUROPÄISCHE PATENTSCHRIFT

(11) **EP 2 890 071 B1**
(45) Veröffentlichungstag und Bekanntmachung des Hinweises auf die Patenterteilung: **03.06.2020**
(21) Anmeldenummer: 13199802.3
(22) Anmeldetag: 30.12.2013
(51) Int. Cl.: H04L 29/06

(54) **VERFAHREN ZUM AUFBAU EINER VIDEOKONFERENZVERBINDUNG**
Method for establishing a video conference connection
Procédé destiné à la création d'une liaison de vidéoconférence

(43) Veröffentlichungstag der Anmeldung: 01.07.2015
(73) Patentinhaber: Deutsche Telekom AG, 53113 Bonn (DE)
(72) Erfinder: Wilhelm, Uwe-Georg, 53113 Bonn (DE)
(74) Vertreter: Braun-Dullaeus Pannen Emmerling Patent- & Rechtsanwaltspartnerschaft mbB

(56) Entgegenhaltungen:
- EP-A1- 2 611 255
- CN-Y- 201 422 134
- US-B1- 8 509 853
- Poikselka, Miikka: "THE IMS IP MULTIMEDIA CONCEPTS AND SERVICES", 1. Januar 2009 (2009-01-01), Wiley and Sons, XP002725084, ISBN: 978-0-470-72196-4 * Seite 6 * * Seite 24 - Seite 26 * * Seite 48 * * Seite 50 - Seite 51 * * Seite 260 - Seite 261 * * Seite 331 - Seite 339 * * Abbildung 3.3 * * Abbildung 12.2 *
- Silvia Scalisi: "IMS Release 10 Tutorial", , 26. März 2012 (2012-03-26), XP055120655, Gefunden im Internet: URL:http://disi.unitn.it/locigno/didattica /AdNet/10-11/IMS_Tutorial_Scalisi.pdf [gefunden am 2014-05-28]
- Anonymous: "IPTV", , 26. Dezember 2013 (2013-12-26), XP055120685, Gefunden im Internet: URL:http://en.wikipedia.org/w/index.php?ti tle=IPTV&oldid=587692533 [gefunden am 2014-05-28]
- Anonymous: "IMS Release 10 Tutorial", , 26. März 2012 (2012-03-26), XP055120656, Gefunden im Internet: URL:http://www.slideshare.net/zahidtg/ims- release10-tutorialscalisi [gefunden am 2014-05-28]

## Beschreibung

Die vorliegende Erfindung betrifft ein Verfahren und ein Kommunikationssystem zum Aufbau einer Videokonferenzverbindung.

Die fortschreitende Entwicklung moderner Kommunikationssysteme ermöglichte auch die Implementierung von Videokonferenzsystemen. Hierbei werden zwischen zwei oder mehreren Computern Bild- und Audiodaten über Internet unter Ausnutzung des Internet-Protokolls übertragen. Für die Aufnahme der Bilddaten kann eine digitale Bildkamera eingesetzt werden, während die Audiodaten mittels eines Mikrophons aufgenommen werden können. Zur Wiedergabe der Bild- und Audiodaten wird ein Wiedergabeterminal, beispielsweise ein Laptop oder ein Fernsehgerät, benötigt. Für die Kommunikation über Internet können grundsätzlich auch internetfähige Fernsehgeräte werden, welche als internetfähige Computer aufgefasst werden können.

Zum Aufbau einer Videokonferenzverbindung über Internet mit hoher Stabilität und Qualität wird jedoch eine bidirektional breitbandige und stabile Internetverbindung benötigt. Dies kann in der Regel nur über hierfür eigens reservierte, breitbandige Kommunikationsressourcen gesichert werden, was für Heimanwender jedoch oft zu teuer ist. Aus diesem Grund sind qualitativ hochwertige, bidirektionale Videokonferenzsysteme über Internet meist sehr teuer und daher hauptsächlich im Unternehmensumfeld zu finden.

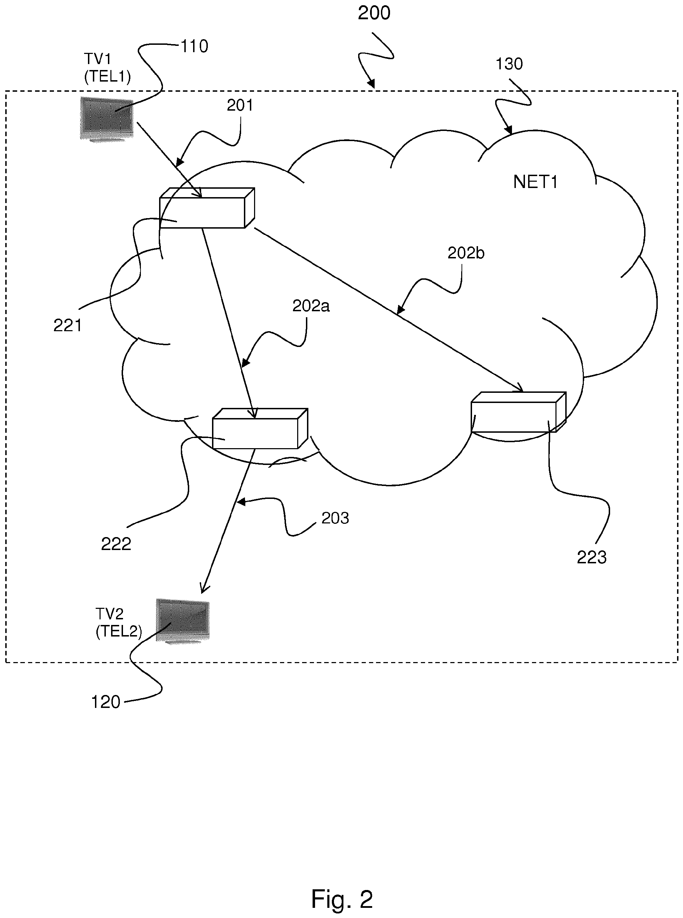

Die Druckschrift "IMS Release 10 Tutorial", betrifft ein Tutorial über das IP Multimedia System Release 10. Fig. 2a illustriert den Registrierungsvorgang eines Mobiltelefons UE in dem Registrierungsserver seines Heimatnetzes und Fig. 2b zeigt den Verbindungsaufbau zwischen einem ersten Mobiltelefon "Sender" und einem zweiten Mobiltelefon "Receiver" für die zwei Fälle (i) dass das zweite Mobiltelefon im Heimatnetz des ersten Mobiltelefons registriert ist, und (ii) dass das zweite Mobiltelefon in einem anderen Netz registriert ist.

Die Druckschrift CN 201 422 134 Y beschreibt ein Fernsehgerät, welches 3G Technologie mit TV Technologie verbindet. Allerdings beschreibt D7 nur allgemein, dass das Fernsehgerät sowohl mit 3G (Mobilfunk) Technologie als auch mit TV Technologie ausgestattet sein kann ohne dabei konkret zu beschreiben wie der Registrierungsvorgang im 3G Netz aussehen könnte.

Es ist die Aufgabe der vorliegenden Erfindung, ein anderes Konzept zum Aufbau einer Videokonferenzverbindung zwischen zwei Fernsehgeräten zu schaffen.

Diese Aufgabe wird durch die Merkmale der unabhängigen Ansprüche gelöst. Vorteilhafte Weiterbildungsformen sind Gegenstand der abhängigen Ansprüche.

Die vorliegende Erfindung basiert auf der Erkenntnis, dass die obige Aufgabe durch eine Anbindung eines Fernsehgerätes an ein mobiles oder drahtgebundenes Telefonnetz, insbesondere an das IMS-Kommunikationssystem, gelöst werden kann. Die Anbindung des Fernsehgerätes an das Telefonnetz kann zusätzlich zu einer ggf. bereits für das Internet-Fernsehen (IP TV) bestehenden Internetverbindung erfolgen. Für den Aufbau der Videokonferenzverbindung kann hierbei ein Rückkanal der Internetverbindung für IP TV verwendet werden. Insbesondere können einige oder sämtliche der nachfolgend beschriebenen Nachrichten zum Aufbau einer Videokonferenzverbindung über diesen Rückkanal übertragen werden.

Für die Anbindung des Fernsehgerätes an das Telefonnetz kann dem Fernsehgerät eine Telefonnummer zugewiesen werden. Diese Zuweisung kann entweder durch einen Telefongesellschaft im Falle einer eigens für das Fernsehgerät zugewiesenen Telefonnummer, oder durch einen Anwender, welcher dem Fernsehgerät seine Telefonnummer, beispielsweise seine Festnetz-Telefonnummer oder Mobilfunk-Telefonnummer zuweist, erfolgen.

Um die Erfindung im Detail zu beschreiben, werden die folgenden Abkürzungen und Bezeichnungen verwendet:
- IMS:: IP Multimedia Subsystem.
- SIP:: Session Initiation Protocol.
- P-CSCF:: Proxy-Call Session Control Function.
- I-CSCF:: Interrogating-Call Session Control Function.
- S-CSCF:: Serving-Call Session Control Function.
- HSS:: Home Subscriber Server.

Gemäß einem Aspekt betrifft die Erfindung ein Verfahren zum Aufbau einer Videokonferenzverbindung zwischen einem ersten Fernsehgerät und einem zweiten Fernsehgerät gemäß Anspruch 1.

Der Vorteil eines solchen Verfahrens ist, dass nur noch ein Kommunikationsgerät im Hausnetzwerk nötig ist, um alle Kommunikationsaufgaben zu erledigen.

Gemäß einer Ausführungsform umfasst das Verfahren ferner ein Registrieren des zweiten Fernsehgeräts in dem ersten Kommunikationsnetzwerk.

Ein Registrieren stellt sicher, dass das zweite Fernsehgerät im ersten Kommunikationsnetzwerk vorhanden ist. Außerdem erlaubt ein Registrieren ein erneutes Abmelden und Neuregistrieren in einem anderen Netzwerk und ist damit für mobile Geräte geeignet.

Gemäß einer Ausführungsform des Verfahrens umfasst das erste Kommunikationsnetzwerk einen ersten Proxy Server, einen ersten Verbindungs-Server, einen ersten Abfrage-Server und einen ersten Teilnehmerdaten-Server.

Der Vorteil eines solchen Verfahrens ist, dass erster Proxy Server, erster Verbindungs-Server, erster Abfrage-Server und erster Teilnehmerdaten-Server sich die Aufgaben teilen können. Dies erlaubt dezentrale Netze, die flexibel sind gegenüber Erweiterungen und Anpassungen.

Gemäß einer Ausführungsform des Verfahrens umfasst das Registrieren des zweiten Fernsehgeräts in dem ersten Kommunikationsnetzwerk einen Eintrag der zweiten Telefonnummer in dem ersten Teilnehmerdaten-Server, um die zweite Telefonnummer in dem ersten Kommunikationsnetzwerk bekannt zu machen.

Der Vorteil eines solchen Verfahrens ist, dass das zweite Fernsehgerät einfach im Kommunikationsnetzwerk registriert werden kann. Mit seiner Registrierung über die Telefonnummer ist sein Aufenthalt dem Kommunikationssystem bekannt.

Gemäß einer Ausführungsform des Verfahrens weist das Registrieren folgende Schritte auf: Senden einer Registrierungsnachricht durch das zweite Fernsehgerät an den ersten Proxy Server; Lokalisieren des ersten Abfrage-Servers durch den ersten Proxy Server basierend auf der Registrierungsnachricht; und Abfragen des ersten Teilnehmerdaten-Servers durch den ersten Abfrage-Server, um den ersten Verbindungs-Server, der dem zweiten Fernsehgerät zugeordnet ist, zu bestimmen.

Der Vorteil eines solchen Verfahrens ist, dass das zweite Fernsehgerät flexibel bestimmbar ist.

Gemäß einer Ausführungsform umfasst das Verfahren ferner ein Erfassen des ersten Verbindungs-Servers durch den ersten Abfrage-Server, wenn der erste Verbindungs-Server dem zweiten Fernsehgerät in dem ersten Teilnehmerdaten-Server zugeordnet ist; und ein Zuordnen eines neuen ersten Verbindungs-Servers zu dem zweiten Fernsehgerät in dem ersten Teilnehmerdaten-Server, wenn der erste Verbindungs-Server dem zweiten Fernsehgerät in dem ersten Teilnehmerdaten-Server nicht zugeordnet ist.

Der Vorteil eines solchen Verfahrens ist, dass zweite Fernsehgerät seinen Ort jederzeit flexibel im Netzwerk verändern kann.

Gemäß einer Ausführungsform umfasst das Abfragen des ersten Teilnehmerdaten-Servers nach dem ersten Verbindungs-Server folgende Schritte: Anfragen an das zweite Fernsehgerät nach Authentifizierungsdaten durch den ersten Verbindungs-Server, um von dem zweiten Fernsehgerät die Authentifizierungsdaten zu erhalten; und Vergleichen der erhaltenen Authentifizierungsdaten mit in dem ersten Teilnehmerdaten-Server gespeicherten Authentifizierungsdaten, wobei das Registrieren bei Übereinstimmung der erhaltenen Authentifizierungsdaten mit den gespeicherten Authentifizierungsdaten erfolgreich ist.

Der Vorteil eines solchen Verfahrens ist, dass der Registrierungsvorgang sicher ist.

Gemäß einer Ausführungsform umfasst das Verfahren ferner ein Registrieren des zweiten Fernsehgeräts in dem zweiten Kommunikationsnetzwerk.

Ein Registrieren stellt sicher, dass das zweite Fernsehgerät im zweiten Kommunikationsnetzwerk vorhanden ist. Außerdem erlaubt ein Registrieren ein erneutes Abmelden und Neuregistrieren in einem anderen Netzwerk und ist damit für mobile Geräte geeignet.

Gemäß einer Ausführungsform umfasst das zweite Kommunikationsnetzwerk einen zweiten Proxy Server, einen zweiten Verbindungs-Server, einen zweiten Abfrage-Server und den zweiten Teilnehmerdaten-Server.

Der Vorteil eines solchen Verfahrens ist, dass zweiter Proxy Server, zweiter Verbindungs-Server, zweiter Abfrage-Server und zweiter Teilnehmerdaten-Server sich die Aufgaben teilen können. Dies erlaubt dezentrale Netze, die flexibel sind gegenüber Erweiterungen und Anpassungen.

Gemäß einerAusführungsform umfasst das Registrieren des zweiten Fernsehgeräts in dem zweiten Kommunikationsnetzwerk einen Eintrag der zweiten Telefonnummer in dem zweiten Teilnehmerdaten-Server, um die zweite Telefonnummer in dem zweiten Kommunikationsnetzwerk bekannt zu machen.

Der Vorteil eines solchen Verfahrens ist, dass das zweite Fernsehgerät einfach im Kommunikationsnetzwerk registriert werden kann. Mit seiner Registrierung über die Telefonnummer ist sein Aufenthalt dem Kommunikationssystem bekannt.

Gemäß einer Ausführungsform umfasst das Registrieren folgende Schritte: Senden einer Registrierungsnachricht durch das zweite Fernsehgerät an den zweiten Proxy Server; Lokalisieren des zweiten Abfrage-Servers durch den zweiten Proxy Server basierend auf der Registrierungsnachricht; und Abfragen des zweiten Teilnehmerdaten-Servers durch den zweiten Abfrage-Server, um den zweiten Verbindungs-Server, der dem zweiten Fernsehgerät zugeordnet ist, zu bestimmen.

Der Vorteil eines solchen Verfahrens ist, dass das zweite Fernsehgerät flexibel bestimmbar ist.

Gemäß einer Ausführungsform umfasst das Verfahren ferner ein Erfassen des zweiten Verbindungs-Servers durch den zweiten Abfrage-Server, wenn der zweite Verbindungs-Server dem zweiten Fernsehgerät in dem zweiten Teilnehmerdaten-Server zugeordnet ist; und ein Zuordnen eines neuen zweiten Verbindungs-Servers zu dem zweiten Fernsehgerät in dem zweiten Teilnehmerdaten-Server, wenn der zweite Verbindungs-Server dem zweiten Fernsehgerät in dem zweiten Teilnehmerdaten-Server nicht zugeordnet ist.

Der Vorteil eines solchen Verfahrens ist, dass das zweite Fernsehgerät seinen Ort jederzeit flexibel verändern kann.

Gemäß einer Ausführungsform umfasst das Abfragen des zweiten Teilnehmerdaten-Servers nach dem zweiten Verbindungs-Server folgende Schritte: Anfragen an das zweite Fernsehgerät nach Authentifizierungsdaten durch den zweiten Verbindungs-Server, um von dem zweiten Fernsehgerät die Authentifizierungsdaten zu erhalten; und Vergleichen der erhaltenen Authentifizierungsdaten mit in dem zweiten Teilnehmerdaten-Server gespeicherten Authentifizierungsdaten, wobei das Registrieren bei Übereinstimmung der erhaltenen Authentifizierungsdaten mit den gespeicherten Authentifizierungsdaten erfolgreich ist.

Der Vorteil eines solchen Verfahrens ist, dass es sicher arbeitet.

Gemäß einer Ausführungsform umfasst das Verfahren ein Nutzen des ersten Proxy Servers, um die von dem ersten Fernsehgerät ausgesendete Verbindungsanfrage zu empfangen, und zu bestimmen, ob das zweite Fernsehgerät in dem ersten Kommunikationsnetzwerk registriert ist; ein Nutzen des ersten Proxy Servers, um die Verbindungsanfrage in dem ersten Kommunikationsnetz weiterzuleiten, wenn das zweite Fernsehgerät in dem ersten Kommunikationsnetzwerk registriert ist; ein Nutzen des ersten Proxy Servers, um basierend auf der Verbindungsanfrage einen zweiten Abfrage-Server in dem zweiten Kommunikationsnetzwerk aufzufinden und die Verbindungsanfrage an den zweiten Abfrage-Server weiterzuleiten, wenn das zweite Fernsehgerät in dem ersten Kommunikationsnetzwerk nicht registriert ist; und ein Nutzen des ersten Verbindungs-Servers, um die von dem ersten Proxy Server weitergeleitete Verbindungsanfrage zu empfangen und an das zweite Fernsehgerät weiterzuleiten.

Der Vorteil eines solchen Verfahrens ist, dass erster Proxy Server und erster Verbindungs-Server flexibel und vielseitig einsetzbar sind.

Gemäß einer Ausführungsform umfasst das Verfahren ein Nutzen des zweiten Abfrage-Servers, um basierend auf der Verbindungsanfrage die Teilnehmerdaten von dem zweiten Teilnehmerdaten-Server zu erfragen und basierend auf den Teilnehmerdaten einen zweiten Verbindungs-Server, der dem zweiten Fernsehgerät zugeordnet ist, zu bestimmen; und ein Nutzen des zweiten Verbindungs-Servers, um die Verbindungsanfrage von dem zweiten Abfrage-Server zu empfangen und an das zweite Fernsehgerät weiterzuleiten.

Der Vorteil eines solchen Verfahrens ist, dass aufgrund der Arbeitsteilung der zweite Abfrage-Server die Verbindung schnell routen kann, während der zweite Teilnehmer-Server eine effiziente Verwaltung einer Vielzahl von Verbindungen vornehmen kann.

Gemäß einem Aspekt betrifft die Erfindung ein Kommunikationssystem zum Aufbau einer Videokonferenzverbindung zwischen einem ersten Fernsehgerät und einem zweiten Fernsehgerät gemäß Anspruch 12.

Der Vorteil eines solchen Kommunikationssystems ist, dass im Heimnetzwerk nur noch ein Kommunikationsgerät benötigt wird, nämlich ein Fernsehgerät mit Telefonnummer, um alle notwendigen Aufgaben zu erfüllen. Das Kommunikationssystems ist nicht auf den Heimnetzwerkbereich beschränkt, es umfasst alle mobilen Anwendungen und Infrastrukturen.

Gemäß einer Ausführungsform des Kommunikationssystems basiert die Verbindungsanfrage auf einem Session Initiation Protocol, SIP.

Der Vorteil eines solchen Kommunikationssystems ist, dass SIP ein standardisiertes Protokoll ist, das bereits standardmäßig im Feld eingesetzt wird. Das Kommunikationssystem ist somit kompatibel zu allen Kommunikationsgeräten, die SIP implementieren.

Gemäß einer Ausführungsform des Kommunikationssystems ist der Proxy-Server ausgelegt, zu einem Internet Multimedia Subsystem, IMS Teilnehmeranschluss eine Verbindung aufzubauen.

Der Vorteil eines solchen Kommunikationssystems ist, dass es kompatibel zu bereits existierenden IMS Systemen ist und Schnittstellen dieser IMS Systeme mit in das Kommunikationssystem eingebunden werden können.

Weitere Ausführungsbeispiele werden Bezug nehmend auf die beiliegenden Zeichnungen erläutert. Es zeigen:
- Fig. 1: eine schematische Darstellung einer Registrierung eines Fernsehgeräts in einem Kommunikationsnetzwerk gemäß einer Ausführungsform;
- Fig. 2: eine schematische Darstellung eines Aufbaus einer Videokonferenzverbindung zwischen einem ersten Fernsehgerät und einem zweiten Fernsehgerät, wenn beide Fernsehgeräte im selben Kommunikationsnetzwerk registriert sind gemäß einer Ausführungsform;
- Fig. 3: eine schematische Darstellung eines Aufbaus einer Videokonferenzverbindung zwischen einem ersten Fernsehgerät und einem zweiten Fernsehgerät, wenn beide Fernsehgeräte in unterschiedlichen Kommunikationsnetzwerken registriert sind gemäß einer Ausführungsform;
- Fig. 4: eine schematische Darstellung eines Teilnehmerdatenservers in einem ersten Kommunikationsnetzwerk mit einem beispielhaften Teilnehmerdatensatz gemäß einer Ausführungsform; und
- Fig. 5: eine schematische Darstellung eines Verfahrens zum Aufbau einer Videokonferenzverbindung zwischen einem ersten Fernsehgerät und einem zweiten Fernsehgerät gemäß einer Ausführungsform.

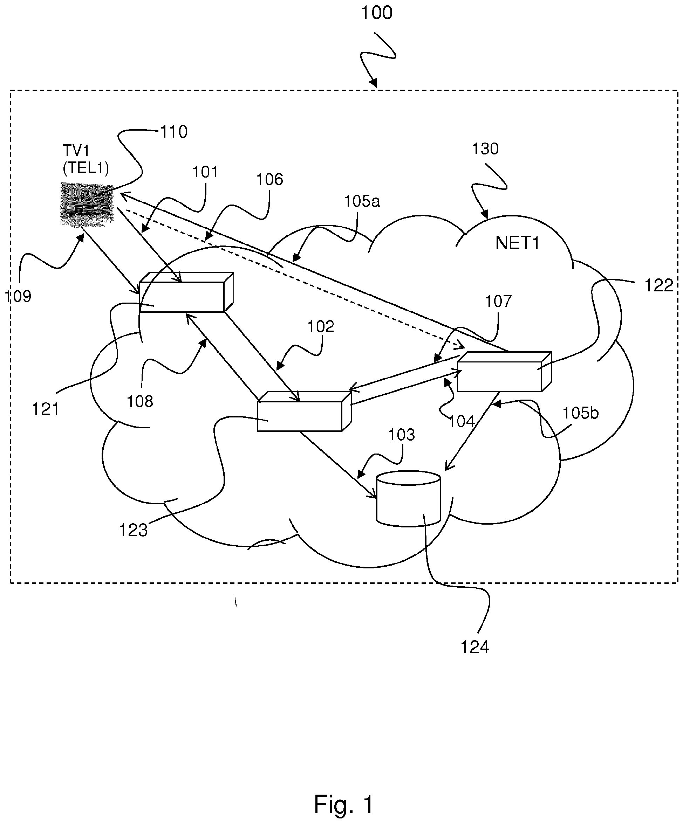

Fig. 1 zeigt eine schematische Darstellung einer Registrierung 100 eines Fernsehgeräts 110 in einem Kommunikationsnetzwerk 130 gemäß einer Ausführungsform. Dem Fernsehgerät 110 ist eine Telefonnummer TEL1 zugeordnet.

Das Kommunikationsnetzwerk 130 umfasst einen Proxy-Server 121, der beispielsweise als ein P-CSCF eines IMS Netzwerks ausgeführt sein kann und mit dem ersten Fernsehgerät 110 verbunden ist, wobei der Begriff "verbunden" oder "in Verbindung stehen" in dieser Anmeldung nicht auf die Bedeutung einer direkten Verbindung beschränkt ist, sondern auch eine Verbindung unter Nutzung weiterer Einheiten zum Herstellen der Verbindung umfassen kann. Das Kommunikationsnetzwerk 130 umfasst ferner einen Abfrage-Server 122, der beispielsweise als ein I-CSCF eines IMS Netzwerks ausgebildet sein kann, und mit dem Proxy-Server 121 in Verbindung steht. Das Kommunikationsnetzwerk 130 umfasst ferner einen Verbindungs-Server 123, der beispielsweise als ein S-CSCF eines IMS Netzwerks ausgebildet sein kann, und mit dem Abfrage-Server 122 und mit dem ersten Fernsehgerät 110 in Verbindung steht. Das Kommunikationsnetzwerk 130 umfasst ferner einen Teilnehmerdaten-Server 124, der beispielsweise als ein HSS eines IMS Netzwerks ausgebildet sein kann, und mit dem Abfrage-Server 122 und mit dem Verbindungs-Server 123 in Verbindung steht.

Damit eine Videokonferenzverbindung zwischen zwei Fernsehgeräten aufgebaut werden kann, sollten sich beide Fernsehgeräte zuvor im Netz registrieren, damit die Kommunikationsarchitektur, beispielsweise ein IMS Netzwerk, weiß wo sie Rufe hinzuvermitteln hat. Bei IMS ist es beispielsweise erforderlich dass sich jedes Gerät bei seiner Aktivierung im Netzwerk registriert. Sollte das Fernsehgerät, bei dem es sich auch um ein mobiles Gerät handeln kann, danach seinen Ort verändern, so sollte es sich an dem neuen Ort neu registrieren, um dem Netzwerk zu erlauben, die geänderten Ortsinformationen zu übernehmen und stets aktuell zu halten. Der Registrierungsprozess eines Fernsehgeräts 110 im Netzwerk 130 ist in Fig. 1 näher dargestellt. Er ist allgemein beschrieben und gilt auch analog für die Registrierung eines zweiten Fernsehgeräts im Netzwerk 130 oder in einem zweiten Netzwerk 132, wie unten zu Fig. 2 bis 3 genauer dargestellt.

Der Registrierungsprozess umfasst die zehn in der Figur dargestellten Nachrichten 101 bis 109. Es können im Einzelnen aber auch weniger oder mehr Nachrichten sein. Als erste Nachricht 101 sendet das erste Fernsehgerät 110 eine Registrierungsnachricht 101 bzw. Registrierungsanfrage an den mit ihm verbundenen Proxy-Server 121. Die Registrierungsnachricht 101 umfasst eine Telefonnummer TEL1, die dem ersten Fernsehgerät 110 zugewiesen ist und eine Identitätsinformation des ersten Fernsehgeräts 110, beispielsweise eine ID oder Authentifizierungsinformationen wie einen Schlüssel und kann zusätzlich weitere Informationen umfassen. Die Registrierungsnachricht 101 kann eine SIP Nachricht sein, insbesondere eine SIP Nachricht des Typs "SIP REGISTER". Der Proxy-Server 121 lokalisiert den Abfrage-Server 123 für das Heimnetzwerk des ersten Fernsehgeräts 110 und leitet die von dem ersten Fernsehgerät empfangene Registrierungsnachricht 101 an den ermittelten Abfrage-Server 123 weiter (zweite Nachricht 102).

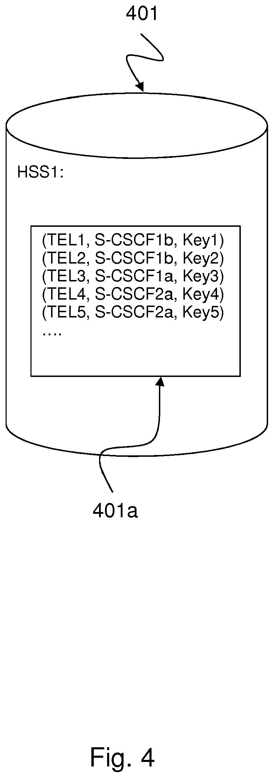

Der Abfrage-Server 123 erkundigt sich auf die zweite Nachricht 102 hin beim Teilnehmerdaten-Server 124 des ersten Kommunikationsnetzwerks 130 nach dem für das erste Fernsehgerät 110 zuständigen Verbindungs-Server 122 (dritte Nachricht 103) und leitet die Registrierungsnachricht 101 an diesen Verbindungs-Server 122 weiter (vierte Nachricht 104). Falls kein Verbindungs-Server 122 im Teilnehmerdaten-Server 124 für das erste Fernsehgerät 110 eingetragen ist, so wird ein neuer Verbindungs-Server 122 dem ersten Fernsehgerät 110 zugeordnet (nicht in Fig. 1 dargestellt). Der Verbindungs-Server 122 fragt auf die Registrierungsnachricht 101 hin das erste Fernsehgerät 110 nach Authentifizierungsdaten für das erste Fernsehgerät 110 (fünfte Nachricht 105a), beispielsweise kann es sich um eine SIP Nachricht des Typs "401 Unauthorized challenge" handeln. Auf diese Anfrage 105a hin antwortet das erste Fernsehgerät 110 mit seinen Authentifizierungsdaten (sechste Nachricht 106), beispielsweise ein kryptographischer Schlüssel. Der Verbindungs-Server 122 fragt gleichfalls den Teilnehmerdaten-Server 124 nach der Berechtigung für das erste Fernsehgerät 110 (siebte Nachricht 105b) und vergleicht die von dem Teilnehmerdaten-Server 124 erhaltene Berechtigung, beispielsweise ein kryptographischer Schlüssel, mit den von dem ersten Fernsehgerät 110 gelieferten Authentifizierungsdaten. Bei Übereinstimmung übermittelt der Verbindungs-Server 122 sein Einverständnis, beispielsweise in Form einer SIP Nachricht des Typs "200 OK", an den Abfrage-Server 123 (achte Nachricht 107). Bei fehlender Übereinstimmung übersendet der Verbindungs-Server 122 eine Fehlermeldung an den Abfrage-Server 123 (nicht in Fig. 1 dargestellt). Das Einverständnis wird weiter von dem Abfrage-Server 123 an den Proxy-Server 121 übermittelt (neunte Nachricht 108) und von dem Proxy-Server 121 an das erste Fernsehgerät 110 (zehnte Nachricht 109). Die Authentifizierungsdaten können beispielsweise von der Telefonnummer TEL1 des ersten Fernsehgeräts 110 abhängig sein. Bei Berechtigung des ersten Fernsehgeräts 110 wurden die Authentifizierungsdaten zuvor in dem Teilnehmerdaten-Server 124 eingetragen. Beispielhafte Einträge sind in Fig. 4 näher dargestellt.

Fig. 2 zeigt eine schematische Darstellung eines Aufbaus 200 einer Videokonferenzverbindung zwischen einem ersten Fernsehgerät 110 und einem zweiten Fernsehgerät 120, wenn beide Fernsehgeräte 110, 120 im selben Kommunikationsnetzwerk NET1 130 registriert sind gemäß einer Ausführungsform. Dem ersten Fernsehgerät 110 ist eine erste Telefonnummer TEL1 zugeordnet und dem zweiten Fernsehgerät 120 ist eine zweite Telefonnummer TEL2 zugeordnet.

Das Kommunikationsnetzwerk 130 umfasst einen Proxy-Server 221, der beispielsweise als ein P-CSCF eines IMS Netzwerks ausgeführt sein kann und mit dem ersten Fernsehgerät 110 verbunden ist. Das Kommunikationsnetzwerk 130 umfasst ferner einen ersten Verbindungs-Server 222 und einen zweiten Verbindungs-Server 223, die beispielsweise jeweils als S-CSCF eines IMS Netzwerks ausgebildet sein können, und mit dem Proxy-Server 221 in Verbindung stehen. Der erste Verbindungs-Server 222 ist mit dem zweiten Fernsehgerät 120 verbunden.

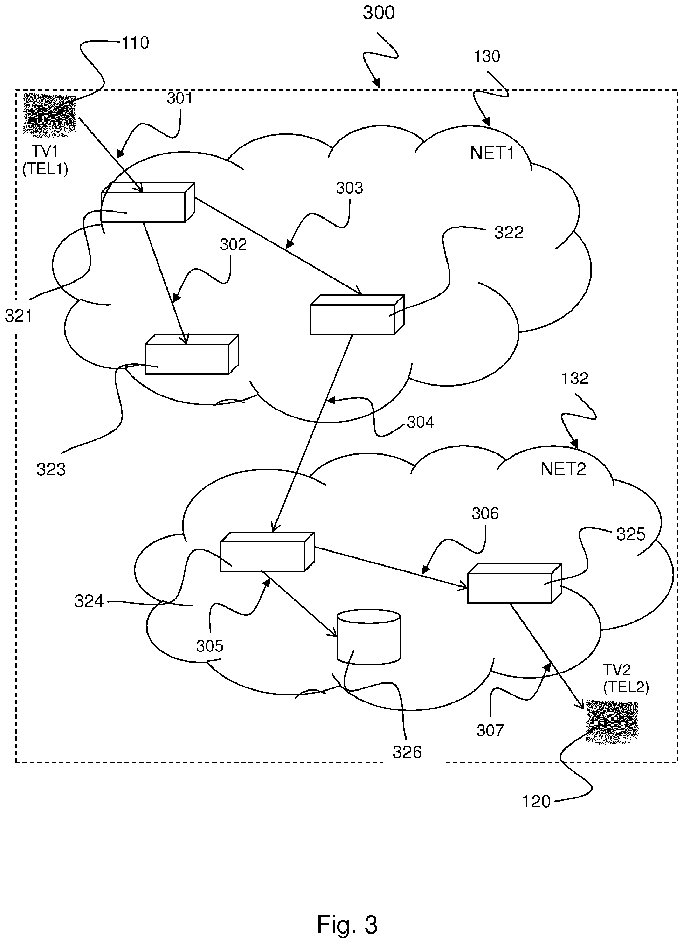

Der Verbindungsaufbau umfasst die vier in der Figur dargestellten Nachrichten 201 bis 204. Es können im Einzelnen aber auch weniger oder mehr Nachrichten sein. Als erste Nachricht 201 sendet das erste Fernsehgerät 110 eine Verbindungsanfrage 201 bzw. Verbindungsnachricht an den mit ihm verbundenen Proxy-Server 221. Die Verbindungsanfrage 201 umfasst die Telefonnummer TEL2 des zweiten Fernsehgeräts, mit dem das erste Fernsehgerät eine Videokonferenz aufbauen möchte und kann zusätzlich weitere Informationen umfassen. Die Verbindungsanfrage 201 kann eine SIP Nachricht sein, insbesondere eine SIP Nachricht des Typs "SIP INVITE". Nach Erhalt der Verbindungsanfrage 201 stellt der Proxy-Server 221 fest, ob sich das gerufene zweite Fernsehgerät 120 im selben Kommunikationsnetz 130 befindet wie das erste Fernsehgerät 110. Ist dies der Fall (wie in Fig. 2 dargestellt), so leitet der Proxy-Server 221 die Verbindungsanfrage 201 an den dem zweiten Fernsehgerät 120 zugeordneten ersten Verbindungs-Server 222 weiter (zweite Nachricht 202a). Ist dies nicht der Fall (wie in Fig. 3 dargestellt), so leitet der Proxy-Server 221 die Verbindungsanfrage 201 an den mit anderen Netzen in Kontakt stehenden zweiten Verbindungs-Server 223 weiter (dritte Nachricht 202b). Der erste Verbindungs-Server 222 leitet die Verbindungsanfrage an das zweite Fernsehgerät weiter (vierte Nachricht 203).

Im weiteren Verlauf, der nicht mehr in Fig. 2 dargestellt ist, antwortet das zweite Fernsehgerät 120 auf die Verbindungsanfrage durch das erste Fernsehgerät 110, beispielsweise mit einer SIP Nachricht des Typs "200 OK" und das erste Fernsehgerät 110 quittiert die Antwort mit einer Quittierungsnachricht, beispielsweise mit einer SIP Nachricht des Typs "ACK". An diesem Punkt ist die Verbindung erfolgreich aufgebaut. Während dieser Schritte verhandeln die beiden Fernsehgeräte 110, 120 über die Ressourcen. Das zweite Fernsehgerät 120 wertet den Inhalt der Verbindungsanfrage 201 aus und prüft, ob es in der Lage ist, die angeforderten Ressourcen bereitzustellen, beispielsweise die Mediatypen mit entsprechenden Parametern wie z.B. Bildformat, Codec-Typ, Bildrate, etc. Die anzufordernden Ressourcen können beispielsweise mittels einer SDP Nachricht in der Verbindungsanfrage codiert sein. Sind sich beide Fernsehgeräte 110, 120 über die Ressourcen einig, so kommt die Verbindung dementsprechend zustande.

Falls im Laufe einer aufgebauten Verbindung Parameter geändert werden sollen, so kann auch eine Änderungsanfrage gemacht werden, um so eine neuen Aushandlung der Parameter herbeizuführen, beispielsweise mittels einer SIP Nachricht des Typs "UPDATE" oder erneut "INVITE". Soll eine aufgebaute Verbindung beendet werden, so sendet ein Gerät eine Beendigungsnachricht, beispielsweise eine SIP Nachricht des Typs "BYE" und das zweite Gerät antwortet mit einer Bestätigungsnachricht, beispielsweise eine SIP Nachricht des Typs "200 OK".

Fig. 3 zeigt eine schematische Darstellung eines Aufbaus 300 einer Videokonferenzverbindung zwischen einem ersten Fernsehgerät 110 und einem zweiten Fernsehgerät 120, wenn beide Fernsehgeräte 110, 120 in unterschiedlichen Kommunikationsnetzwerken registriert sind gemäß einer Ausführungsform. Dem ersten Fernsehgerät 110 ist eine erste Telefonnummer TEL1 zugeordnet und dem zweiten Fernsehgerät 120 ist eine zweite Telefonnummer TEL2 zugeordnet.

Das erste Kommunikationsnetzwerk NET1 130 umfasst einen Proxy-Server 321, der beispielsweise als ein P-CSCF eines IMS Netzwerks ausgeführt sein kann und mit dem ersten Fernsehgerät 110 verbunden ist. Das erste Kommunikationsnetzwerk 130 umfasst ferner einen ersten Verbindungs-Server 322 und einen zweiten Verbindungs-Server 323, die beispielsweise jeweils als S-CSCF eines IMS Netzwerks ausgebildet sein können, und mit dem Proxy-Server 321 in Verbindung stehen.

Das zweite Kommunikationsnetzwerk 132 132 umfasst einen Abfrage-Server 324, der beispielsweise als ein I-CSCF eines IMS Netzwerks ausgeführt sein kann und mit dem ersten Verbindungs-Server 322 des ersten Kommunikationsnetzwerks NET1 130 verbunden ist. Das zweite Kommunikationsnetzwerk 132 umfasst ferner einen Verbindungs-Server 325, der beispielsweise als S-CSCF eines IMS Netzwerks ausgebildet sein kann, und mit dem Abfrage-Server 324 in Verbindung steht. Das zweite Kommunikationsnetzwerk 132 umfasst ferner einen Teilnehmerdaten-Server 326, der beispielsweise als HSS eines IMS Netzwerks ausgebildet sein kann, und mit dem Abfrage-Server 324 in Verbindung steht.

Neben den in Fig. 3 gezeichneten Verbindungen können jeweils noch weitere zwischen einzelnen Elementen bestehen oder unter Nutzung weiterer Einheiten, die nicht in Fig. 3 eingezeichnet sind. In Fig. 3 sind nur die wesentlichen Einheiten zum Aufbau der Verbindung kenntlich gemacht, weitere Einheiten können zusätzlich vorhanden sein.

Das erste Kommunikationsnetzwerk NET1 130 kann eine Komponente eines IP Multimedia Subsystem Netzwerks sein, ebenso das zweite Kommunikationsnetzwerk 132 132. Die Schnittstellen zu den beiden Fernsehern 110 und 120 kennzeichnen den logischen Informationsfluss. Der Proxy-Server und der Verbindungs-Server können verschiedenartige physikalische und logische Schnittstellen bereitstellen, beispielsweise Luftschnittstelle bei mobilem Anschluss oder POTS, ISDN, ADSL, VDSL, Ethernet, ATM Schnittstellen bei Festnetzanschluss, um eine Kommunikation zwischen beiden Fernsehgeräten 110, 120 zu gewährleisten.

Der Verbindungsaufbau umfasst die sieben in der Figur dargestellten Nachrichten 301 bis 307. Es können im Einzelnen aber auch weniger oder mehr Nachrichten sein. Als erste Nachricht 301 sendet das erste Fernsehgerät 110 eine Verbindungsanfrage 301 bzw. Verbindungsnachricht an den mit ihm verbundenen Proxy-Server 321. Die Verbindungsanfrage 301 umfasst die Telefonnummer TEL2 des zweiten Fernsehgeräts, mit dem das erste Fernsehgerät eine Videokonferenz aufbauen möchte und kann zusätzlich weitere Informationen umfassen. Die Verbindungsanfrage 301 kann eine SIP Nachricht sein, insbesondere eine SIP Nachricht des Typs "SIP INVITE". Nach Erhalt der Verbindungsanfrage 301 stellt der Proxy-Server 321 fest, ob sich das gerufene zweite Fernsehgerät 120 im selben Kommunikationsnetz 130 befindet wie das erste Fernsehgerät 110. Dann würde der Proxy-Server 321 die Verbindungsanfrage 301 an den zweiten Verbindungs-Server 323 weiterleiten (zweite Nachricht 302). Dies ist hier nicht der Fall, so dass der Proxy-Server 321 die Verbindungsanfrage 301 an den mit dem zweiten Kommunikationsnetzwerk 132 in Verbindung stehenden ersten Verbindungs-Server 322 weiterleitet (dritte Nachricht 303) und den Abfrage-Server 324 im zweiten Netzwerk 132 lokalisiert. Der erste Verbindungs-Server 324 leitet die Verbindungsanfrage an den Abfrage-Server 324 im zweiten Netzwerk 132 weiter (vierte Nachricht 304). Der Abfrage-Server 324 fragt beim Teilnehmerdaten-Server 326 im zweiten Netzwerk 132 nach dem für das zweite Fernsehgerät 120 zuständigen Verbindungs-Server 325 nach. Ist das zweite Fernsehgerät 120 im zweiten Netzwerk 132 registriert, so liefert der Teilnehmerdaten-Server 326 die erwünschten Informationen, d.h. den zuständigen Verbindungs-Server 325 an den Abfrage-Server 324 (fünfte Nachricht 305), so dass der Abfrage-Server 324 die Verbindungsanfrage an den zuständigen Verbindungs-Server 325 weiterleiten kann (sechste Nachricht 306) und der Verbindungs-Server 325 die Verbindungsanfrage an das zweite Fernsehgerät 120 stellen kann (siebente Nachricht 307). Gehört das zweite Fernsehgerät 120 zu dem zweiten Netzwerk 132, hat sich dort aber noch nicht registriert, so antwortet der Teilnehmerdaten-Server 326 mit einer Abwesenheitsnotiz, beispielsweise einer SIP Nachricht des Typs "480 Temporary Unavailable". Gehört das zweite Fernsehgerät 120 nicht zum zweiten Netzwerk 132, so antwortet der Teilnehmerdaten-Server 326 mit einer Fehlermeldung, beispielsweise einer SIP Nachricht des Typs "404 Not Found".

Im weiteren Verlauf und für den Fall, dass die Verbindungsanfrage erfolgreich an das zweite Fernsehgerät weitergeleitet wurde, antwortet das zweite Fernsehgerät 120 auf die Verbindungsanfrage durch das erste Fernsehgerät 110, beispielsweise mit einer SIP Nachricht des Typs "200 OK" und das erste Fernsehgerät 110 quittiert die Antwort mit einer Quittierungsnachricht, beispielsweise mit einer SIP Nachricht des Typs "ACK" (nicht mehr in Fig. 3 dargestellt). An diesem Punkt ist die Verbindung erfolgreich aufgebaut. Während dieser Schritte verhandeln die beiden Fernsehgeräte 110, 120 über die Ressourcen wie bereits oben zu Fig. 2 näher dargestellt.

Fig. 3 stellt auch ein Kommunikationssystem zum Aufbau einer Videokonferenzverbindung zwischen einem ersten Fernsehgerät 110 und einem zweiten Fernsehgerät 120 dar, welches den oben beschriebenen Nachrichtenfluss realisiert. Das Kommunikationssystem weist die in Fig. 3 beschriebenen Netzwerkelemente auf. Die Verbindungsanfrage 201, 301 kann auf einem Session Initiation Protocol, SIP basieren.

Der Proxy-Server 321 kann ausgelegt sein, um zu einem Internet Multimedia Subsystem, IMS Teilnehmeranschluss eine Verbindung aufzubauen.

Fig. 4 zeigt eine schematische Darstellung eines Teilnehmerdatenservers 401 in einem ersten Kommunikationsnetzwerk mit einem beispielhaften Teilnehmerdatensatz 401a gemäß einer Ausführungsform. In dem Teilnehmerdatensatz 401a sind Telefonnummern TEL1, TEL2, TEL3, TEL4, TEL5 von Anschlussgeräten gespeichert, für die Telefonnummern zuständige Verbindungs-Server und Authentifizierungsdaten der Anschlussgeräte. Beispielsweise ist das Endgerät mit der Telefonnummer TEL1 einem Verbindungs-Server S-CSCF1b zugeordnet und hat den Schlüssel "Key1". Damit kann der Teilnehmerdatenserver 401 auf Registrierungsanfragen wie zu Fig. 1 beschrieben, den gelieferten Schlüssel mit dem im Server 401 gespeicherten Schlüssel vergleichen und die Registrierungsanfrage positiv oder negativ beantworten. Auf Verbindungsanfragen, wie zu Fig. 2 und 3 beschrieben, kann der Teilnehmerdatenserver 401 den angefragten Verbindungs-Server ermitteln und die Verbindungsanfrage beantworten.

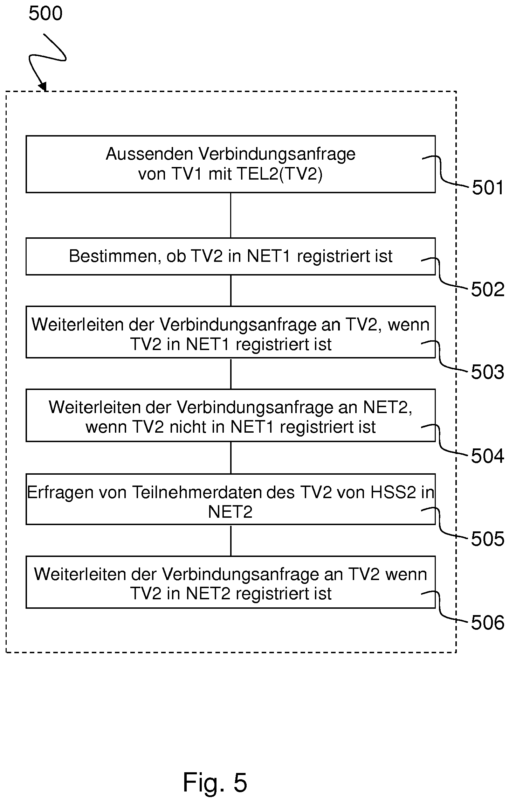

Fig. 5 zeigt eine schematische Darstellung eines Verfahrens 500 zum Aufbau einer Videokonferenzverbindung zwischen einem ersten Fernsehgerät 110 und einem zweiten Fernsehgerät 120 gemäß einer Ausführungsform.

Dem ersten Fernsehgerät 110 ist eine erste Telefonnummer TEL1 und dem zweiten Fernsehgerät 120 ist eine zweite Telefonnummer TEL2 zugeordnet und das erste Fernsehgerät ist in einem ersten Kommunikationsnetzwerk 130 registriert, beispielsweise wie es in den Figuren 1 bis 3 dargestellt ist.

Das Verfahren umfasst ein Aussenden 501 einer Verbindungsanfrage mit der zweiten Telefonnummer TEL2 durch das erste Fernsehgerät 110 um eine Kommunikationsverbindung zu dem zweiten Fernsehgerät 120 aufzubauen, beispielsweise wie in Figur 2 und 3 beschrieben. Das Verfahren umfasst ein Bestimmen 502, ob das zweite Fernsehgerät 120 in dem ersten Kommunikationsnetzwerk 130 registriert ist. Das Verfahren umfasst ein Weiterleiten 503 der Verbindungsanfrage an das zweite Fernsehgerät und eine Annahme der Verbindungsanfrage durch das zweite Fernsehgerät 120 für die Videokonferenzverbindung, wenn das zweite Fernsehgerät 120 in dem ersten Kommunikationsnetzwerk 130 registriert ist. Für den gegenteiligen Fall, dass das zweite Fernsehgerät 120 nicht in dem ersten Kommunikationsnetzwerk 130 registriert ist umfasst das Verfahren ein Auffinden 504 eines zweiten Kommunikationsnetzwerks 132 basierend auf der Verbindungsanfrage und Weiterleiten der Verbindungsanfrage an das zweite Kommunikationsnetzwerk; ein Erfragen 505 von Teilnehmerdaten des zweiten Fernsehgeräts 120 von einem zweiten Teilnehmerdaten-Server in dem zweiten Kommunikationsnetzwerk 132 basierend auf der Verbindungsanfrage; und ein Weiterleiten 506 der Verbindungsanfrage an das zweite Fernsehgerät 120 basierend auf den Teilnehmerdaten des zweiten Fernsehgeräts 120 und Annahme der Verbindungsanfrage durch das zweite Fernsehgerät für die Videokonferenzverbindung, wenn das zweite Fernsehgerät 120 in dem zweiten Kommunikationsnetzwerk 130 registriert ist.

In einer Ausführungsform umfasst das Verfahren 500 ein Registrieren des zweiten Fernsehgeräts 120 in dem ersten Kommunikationsnetzwerk 130. In einer Ausführungsform umfasst das erste Kommunikationsnetzwerk 130 einen ersten Proxy Server, einen ersten Verbindungs-Server, einen ersten Abfrage-Server und einen ersten Teilnehmerdaten-Server. In einer Ausführungsform umfasst das Registrieren des zweiten Fernsehgeräts 120 in dem ersten Kommunikationsnetzwerk 130 einen Eintrag der zweiten Telefonnummer TEL2 in dem ersten Teilnehmerdaten-Server umfasst, um die zweite Telefonnummer TEL2 in dem ersten Kommunikationsnetzwerk 130 bekannt zu machen. In einer Ausführungsform umfasst das Registrieren folgende Schritte: Senden einer Registrierungsnachricht durch das zweite Fernsehgerät an den ersten Proxy Server; Lokalisieren des ersten Abfrage-Servers durch den ersten Proxy Server basierend auf der Registrierungsnachricht; und Abfragen des ersten Teilnehmerdaten-Servers durch den ersten Abfrage-Server, um den ersten Verbindungs-Server, der dem zweiten Fernsehgerät zugeordnet ist, zu bestimmen. In einer Ausführungsform umfasst das Verfahren 500 ein Erfassen des ersten Verbindungs-Servers durch den ersten Abfrage-Server, wenn der erste Verbindungs-Server dem zweiten Fernsehgerät in dem ersten Teilnehmerdaten-Server zugeordnet ist; und ein Zuordnen eines neuen ersten Verbindungs-Servers zu dem zweiten Fernsehgerät 120 in dem ersten Teilnehmerdaten-Server, wenn der erste Verbindungs-Server dem zweiten Fernsehgerät 120 in dem ersten Teilnehmerdaten-Server nicht zugeordnet ist.

In einer Ausführungsform umfasst das Verfahren 500 ein Registrieren des zweiten Fernsehgeräts 120 in dem zweiten Kommunikationsnetzwerk 132.

### Bezugszeichenliste

- 110:: erstes Fernsehgerät, TV1 mit erster Telefonnummer TEL1
- 120:: zweites Fernsehgerät, TV2 mit zweiter Telefonnummer TEL2
- 130:: erstes Kommunikationsnetzwerk NET1, z.B. Teilnetz eines IMS Netzes
- 132:: zweites Kommunikationsnetzwerk NET2, z.B. Teilnetz eines IMS Netzes
- 100:: Registrierungsvorgang eines Fernsehgeräts, z.B. TV1 oder TV2 in einem Kommunikationsnetzwerk, z.B. NET1 oder NET2
- 121:: Proxy-Server, z.B. ein P-CSCF, in erstem Kommunikationsnetzwerk NET1
- 122:: Abfrage-Server, z.B. ein I-CSCF, in erstem Kommunikationsnetzwerk NET1
- 123:: Verbindungs-Server, z.B. ein S-CSCF, in erstem Kommunikationsnetzwerk NET1
- 124:: Teilnehmerdaten-Server, z.B. ein HSS, in erstem Kommunikationsnetzwerk NET1
- 101-109:: Nachrichten bei der Registrierung eines Fernsehgeräts, z.B. TV1 oder TV2 in einem Kommunikationsnetzwerk, z.B. NET1 oder NET2
- 200:: Aufbauvorgang einer Videokonferenzverbindung, bei der beide Fernsehgeräte 110, 120 im selben Kommunikationsnetzwerk registriert sind
- 221:: Proxy-Server, z.B. ein P-CSCF, in erstem Kommunikationsnetzwerk NET1
- 222:: erster Verbindungs-Server, z.B. ein S-CSCF, in erstem Kommunikationsnetzwerk NET1
- 223:: zweiter Verbindungs-Server, z.B. ein S-CSCF, in erstem Kommunikationsnetzwerk NET1
- 201-203:: Nachrichten bei beim Verbindungsaufbau, bei dem beide Fernsehgeräte 110, 120 im selben Kommunikationsnetzwerk, z.B. NET1, registriert sind
- 300:: Aufbauvorgang einer Videokonferenzverbindung, bei der beide Fernsehgeräte 110, 120 in verschiedenen Kommunikationsnetzwerken NET1, NET2 registriert sind
- 321:: Proxy-Server, z.B. ein P-CSCF, in erstem Kommunikationsnetzwerk NET1
- 322:: erster Verbindungs-Server, z.B. ein S-CSCF, in erstem Kommunikationsnetzwerk NET1
- 323:: zweiter Verbindungs-Server, z.B. ein S-CSCF, in erstem Kommunikationsnetzwerk NET1
- 324:: Abfrage-Server, z.B. ein I-CSCF, in zweitem Kommunikationsnetzwerk NET2
- 325:: Verbindungs-Server, z.B. ein S-CSCF, in zweitem Kommunikationsnetzwerk NET2
- 326:: Teilnehmerdaten-Server, z.B. ein HSS, in zweitem Kommunikationsnetzwerk NET2
- 301-307:: Nachrichten bei beim Verbindungsaufbau, bei dem beide Fernsehgeräte 110, 120 in verschiedenen Kommunikationsnetzwerken NET1, NET2 registriert sind
- 401:: Teilnehmerdaten-Server, z.B. ein HSS, in erstem oder zweitem Kommunikationsnetzwerk NET1, NET2
- 401a:: beispielhafter Satz von Teilnehmerdaten in einem Teilnehmerdaten-Server 401
- 500:: Verfahren zum Aufbau einer Videokonferenzverbindung zwischen zwei Fernsehgeräten TV1, TV2

## Patentansprüche

1. Verfahren (500) zum Aufbau einer Videokonferenzverbindung zwischen einem ersten Fernsehgerät (110) und einem zweiten Fernsehgerät (120), wobei dem ersten Fernsehgerät (110) eine erste Telefonnummer (TEL1) und dem zweiten Fernsehgerät (120) eine zweite Telefonnummer (TEL2) zugeordnet ist, und wobei das erste Fernsehgerät in einem ersten Kommunikationsnetzwerk (130) registriert ist, mit:
Aussenden (501) einer Verbindungsanfrage (201, 301) mit der zweiten Telefonnummer (TEL2) durch das erste Fernsehgerät (110) um eine Kommunikationsverbindung zu dem zweiten Fernsehgerät (120) aufzubauen;
Bestimmen (502), ob das zweite Fernsehgerät (120) in dem ersten Kommunikationsnetzwerk (130) registriert ist;
Weiterleiten (503, 202a, 203) der Verbindungsanfrage (201) an das zweite Fernsehgerät (120) und Annahme der Verbindungsanfrage (201) durch das zweite Fernsehgerät (120) für die Videokonferenzverbindung, wenn das zweite Fernsehgerät (120) in dem ersten Kommunikationsnetzwerk (130) registriert ist; ansonsten:
Auffinden (504) eines zweiten Kommunikationsnetzwerks (132) basierend auf der Verbindungsanfrage (301) und Weiterleiten (304) der Verbindungsanfrage (301) an das zweite Kommunikationsnetzwerk (132);
Erfragen (505) von Teilnehmerdaten des zweiten Fernsehgeräts (120) von einem zweiten Teilnehmerdaten-Server (326) in dem zweiten Kommunikationsnetzwerk (132) basierend auf der Verbindungsanfrage (301);
Weiterleiten (506, 306, 307) der Verbindungsanfrage (301) an das zweite Fernsehgerät (120) basierend auf den Teilnehmerdaten des zweiten Fernsehgeräts (120) und Annahme der Verbindungsanfrage (301) durch das zweite Fernsehgerät (120) für die Videokonferenzverbindung, wenn das zweite Fernsehgerät (120) in dem zweiten Kommunikationsnetzwerk (130) registriert ist; und
Registrieren des zweiten Fernsehgeräts (120) in dem ersten Kommunikationsnetzwerk (130);
wobei das erste Kommunikationsnetzwerk (130) einen ersten Proxy Server (121), einen ersten Verbindungs-Server (122), einen ersten Abfrage-Server (123) und einen ersten Teilnehmerdaten-Server (124) umfasst; und
wobei das Registrieren des zweiten Fernsehgeräts (120) in dem ersten Kommunikationsnetzwerk (130) einen Eintrag der zweiten Telefonnummer (TEL2) in dem ersten Teilnehmerdaten-Server (124) umfasst, um die zweite Telefonnummer (TEL2) in dem ersten Kommunikationsnetzwerk (130) bekannt zu machen.

2. Verfahren (500) nach Anspruch 1, wobei das Registrieren folgende Schritte aufweist:
Senden einer Registrierungsnachricht (101) durch das zweite Fernsehgerät (120) an den ersten Proxy Server (121);
Lokalisieren des ersten Abfrage-Servers (123) durch den ersten Proxy Server (121) basierend auf der Registrierungsnachricht (101); und
Abfragen des ersten Teilnehmerdaten-Servers (124) durch den ersten Abfrage-Server (123), um den ersten Verbindungs-Server (122), der dem zweiten Fernsehgerät (120) zugeordnet ist, zu bestimmen.

3. Verfahren (500) nach Anspruch 2, mit:
Erfassen des ersten Verbindungs-Servers (122) durch den ersten Abfrage-Server (123), wenn der erste Verbindungs-Server (122) dem zweiten Fernsehgerät (120) in dem ersten Teilnehmerdaten-Server (124) zugeordnet ist; und
Zuordnen eines neuen ersten Verbindungs-Servers zu dem zweiten Fernsehgerät (120) in dem ersten Teilnehmerdaten-Server (124), wenn der erste Verbindungs-Server (122) dem zweiten Fernsehgerät (120) in dem ersten Teilnehmerdaten-Server (124) nicht zugeordnet ist.

4. Verfahren (500) nach Anspruch 3,
wobei das Abfragen des ersten Teilnehmerdaten-Servers (124) nach dem ersten Verbindungs-Server (122) folgende Schritte umfasst:
Anfragen (105a) an das zweite Fernsehgerät (120) nach Authentifizierungsdaten durch den ersten Verbindungs-Server (122), um von dem zweiten Fernsehgerät (120) die Authentifizierungsdaten (106) zu erhalten; und
Vergleichen der erhaltenen Authentifizierungsdaten (106) mit in dem ersten Teilnehmerdaten-Server (124) gespeicherten Authentifizierungsdaten, wobei das Registrieren bei Übereinstimmung der erhaltenen Authentifizierungsdaten mit den gespeicherten Authentifizierungsdaten erfolgreich ist.

5. Verfahren (500) nach Anspruch 1, mit
Registrieren des zweiten Fernsehgeräts (120) in dem zweiten Kommunikationsnetzwerk (132).

6. Verfahren (500) nach Anspruch 5,
wobei das zweite Kommunikationsnetzwerk (132) einen zweiten Proxy Server, einen zweiten Verbindungs-Server (325), einen zweiten Abfrage-Server (324) und den zweiten Teilnehmerdaten-Server (326) umfasst; und
wobei das Registrieren des zweiten Fernsehgeräts (120) in dem zweiten Kommunikationsnetzwerk (132) einen Eintrag der zweiten Telefonnummer (TEL2) in dem zweiten Teilnehmerdaten-Server (326) umfasst, um die zweite Telefonnummer (TEL2) in dem zweiten Kommunikationsnetzwerk (132) bekannt zu machen.

7. Verfahren (500) nach Anspruch 6, wobei das Registrieren folgende Schritte aufweist:
Senden einer Registrierungsnachricht (101) durch das zweite Fernsehgerät (120) an den zweiten Proxy Server;
Lokalisieren des zweiten Abfrage-Servers (324) durch den zweiten Proxy Server basierend auf der Registrierungsnachricht (101); und
Abfragen des zweiten Teilnehmerdaten-Servers (326) durch den zweiten Abfrage-Server (324), um den zweiten Verbindungs-Server (325), der dem zweiten Fernsehgerät (120) zugeordnet ist, zu bestimmen.

8. Verfahren (500) nach Anspruch 7, mit:
Erfassen des zweiten Verbindungs-Servers (325) durch den zweiten Abfrage-Server (324), wenn der zweite Verbindungs-Server (325) dem zweiten Fernsehgerät (120) in dem zweiten Teilnehmerdaten-Server (326) zugeordnet ist; und
Zuordnen eines neuen zweiten Verbindungs-Servers zu dem zweiten Fernsehgerät (120) in dem zweiten Teilnehmerdaten-Server (326), wenn der zweite Verbindungs-Server (325) dem zweiten Fernsehgerät (120) in dem zweiten Teilnehmerdaten-Server (326) nicht zugeordnet ist.

9. Verfahren (500) nach Anspruch 8,
wobei das Abfragen des zweiten Teilnehmerdaten-Servers (326) nach dem zweiten Verbindungs-Server (325) folgende Schritte umfasst:
Anfragen (105a) an das zweite Fernsehgerät (120) nach Authentifizierungsdaten durch den zweiten Verbindungs-Server (325), um von dem zweiten Fernsehgerät (120) die Authentifizierungsdaten (106) zu erhalten; und
Vergleichen der erhaltenen Authentifizierungsdaten (106) mit in dem zweiten Teilnehmerdaten-Server (326) gespeicherten Authentifizierungsdaten, wobei das Registrieren bei Übereinstimmung der erhaltenen Authentifizierungsdaten mit den gespeicherten Authentifizierungsdaten erfolgreich ist.

10. Verfahren (500) nach einem der Ansprüche 1 bis 4, mit:
Nutzen des ersten Proxy Servers (321), um die von dem ersten Fernsehgerät (110) ausgesendete Verbindungsanfrage (201, 301) zu empfangen, und zu bestimmen, ob das zweite Fernsehgerät (120) in dem ersten Kommunikationsnetzwerk (130) registriert ist;
Nutzen des ersten Proxy Servers (321), um die Verbindungsanfrage (201) in dem ersten Kommunikationsnetz (130) weiterzuleiten, wenn das zweite Fernsehgerät (120) in dem ersten Kommunikationsnetzwerk (130) registriert ist;
Nutzen des ersten Proxy Servers (321), um basierend auf der Verbindungsanfrage (301) einen zweiten Abfrage-Server (324) in dem zweiten Kommunikationsnetzwerk (132) aufzufinden und die Verbindungsanfrage (301) an den zweiten Abfrage-Server (324) weiterzuleiten, wenn das zweite Fernsehgerät (120) in dem ersten Kommunikationsnetzwerk (130) nicht registriert ist; und
Nutzen des ersten Verbindungs-Servers (322), um die von dem ersten Proxy Server (321) weitergeleitete Verbindungsanfrage (301) zu empfangen und an das zweite Fernsehgerät (120) weiterzuleiten.

11. Verfahren (500) nach Anspruch 10, mit
Nutzen des zweiten Abfrage-Servers (324), um basierend auf der Verbindungsanfrage (301) die Teilnehmerdaten von dem zweiten Teilnehmerdaten-Server (326) zu erfragen und basierend auf den Teilnehmerdaten einen zweiten Verbindungs-Server (325), der dem zweiten Fernsehgerät (120) zugeordnet ist, zu bestimmen; und
Nutzen des zweiten Verbindungs-Servers (325), um die Verbindungsanfrage (301) von dem zweiten Abfrage-Server (324) zu empfangen und an das zweite Fernsehgerät (120) weiterzuleiten.

12. Kommunikationssystem zum Aufbau einer Videokonferenzverbindung zwischen einem ersten Fernsehgerät (110) und einem zweiten Fernsehgerät (120), wobei dem ersten Fernsehgerät (110) eine erste Telefonnummer (TEL1) und dem zweiten Fernsehgerät (120) eine zweite Telefonnummer (TEL2) zugeordnet ist, und wobei das erste Fernsehgerät (110) in einem ersten Kommunikationsnetzwerk (130) registriert ist, mit:
einem Proxy-Server (321), der ausgelegt ist basierend auf einer von dem ersten Fernsehgerät (110) ausgesendeten Verbindungsanfrage (201, 301) mit der zweiten Telefonnummer (TEL2) zu bestimmen, ob das zweite Fernsehgerät (120) in dem ersten Kommunikationsnetzwerk (130) registriert ist; und die Verbindungsanfrage (201) an das zweite Fernsehgerät (120) weiterzuleiten, wenn das zweite Fernsehgerät (120) in dem ersten Kommunikationsnetzwerk (130) registriert ist;
wobei der Proxy-Server (321) ferner ausgelegt ist, ein zweites Kommunikationsnetzwerk (132) basierend auf der Verbindungsanfrage (301) aufzufinden und die Verbindungsanfrage (301) an das zweite Kommunikationsnetzwerk (132) weiterzuleiten, wenn das zweite Fernsehgerät (120) nicht in dem ersten Kommunikationsnetzwerk (130) registriert ist;
einem Teilnehmerdaten-Server (326); und
einem Abfrage-Server (324), der ausgelegt ist, Teilnehmerdaten des zweiten Fernsehgeräts (120) basierend auf der Verbindungsanfrage (301) von dem Teilnehmerdaten-Server (326) zu erfragen; und die Verbindungsanfrage (301) an das zweite Fernsehgerät (120) basierend auf den Teilnehmerdaten des zweiten Fernsehgeräts (120) weiterzuleiten, wenn das zweite Fernsehgerät (120) in dem zweiten Kommunikationsnetzwerk (130) registriert ist;
wobei der Teilnehmerdaten-Server (326) ausgelegt ist, das zweite Fernsehgerät (120) in dem ersten Kommunikationsnetzwerk (130) durch Erzeugen eines Eintrags der zweiten Telefonnummer (TEL2) in dem Teilnehmerdaten-Server (326) zu registrieren, um die zweite Telefonnummer (TEL2) in dem ersten Kommunikationsnetzwerk (130) bekannt zu machen.

13. Kommunikationssystem nach Anspruch 12,
wobei die Verbindungsanfrage (201, 301) auf einem Session Initiation Protocol, SIP basiert; und
wobei der Proxy-Server (321) ausgelegt ist, zu einem Internet Multimedia Subsystem Teilnehmeranschluss eine Verbindung aufzubauen.

## Claims

1. A method (500) for establishing a videoconferencing connection between a first television set (110) and a second television set (120), wherein the first television set (110) is associated with a first telephone number (TEL1) and the second television set (120) is associated with a second telephone number (TEL2), and wherein the first television set is registered in a first communication network (130), said method comprising:
Transmitting (501) a connection request (201, 301) with the second telephone number (TEL2) from the first television set (110) to establish a communication connection with the second television set (120);
Determining (502) whether the second television set (120) is registered in the first communication network (130) ;
Forwarding (503, 202a, 203) the connection request (201) to the second television set (120) and acceptance of the connection request (201) by the second television set (120) to establish the videoconferencing connection, if the second television set (120) is registered in the first communication network (130); otherwise:
Locating (504) a second communication network (132) based on the connection request (301) and forwarding (304) the connection request (301) to the second communication network (132);
Retrieving (505) the subscriber data of the second television set (120) from a second subscriber data server (326) in the second communication network (132) based on the connection request (301);
Forwarding (506, 306, 307) the connection request (301) to the second television set (120) based on the subscriber data of the second television set (120) and acceptance of the connection request (301) by the second television set (120) to establish the videoconferencing connection, if the second television set (120) is registered in the second communication network (130); and
Registering the second television set (120) in the first communication network (130);
wherein the first communication network (130) comprises a first proxy server (121), a first connection server (122), a first query server (123) and a first subscriber data server (124); and wherein registering the second television set (120) in the first communication network (130) comprises entering the second telephone number (TEL2) in the first subscriber data server (124), in order to publish the second telephone number (TEL2) in the first communication network (130).

2. The method (500) according to Claim 1, wherein the registration comprises the following steps:
Sending a registration message (101) to the first proxy server (121) from the second television set (120);
Locating of the first query server (123) by the first proxy server (121) based on the registration message (101); and
Querying of the first subscriber data server (124) by the first query server (123) to determine the first connection server (122) associated with the second television set (120).

3. The method (500) according to Claim 2, including:
Detecting of the first connection server (122) by the first query server (123), if the first connection server (122) is associated with the second television set (120) within the first subscriber data server (124); and
Associating a new first connection server with the second television set (120) in the first subscriber data server (124) if the first connection server (122) is not associated with the second television set (120) in the first subscriber data server (124).

4. The method (500) according to Claim 3, wherein querying the first subscriber data server (124) for the first connection server (122) comprises the following steps:
Requesting (105a) authentication data from the second television set (120) via the first connection server (122) to receive the authentication data (106) from the second television set (120); and
Comparing the received authentication data (106) with authentication data stored in the first subscriber data server (124), wherein the registration is successful if the received authentication data matches the stored authentication data.

5. The method (500) according to Claim 1, including the registration of the second television set (120) in the second communication network (132).

6. The method (500) according to Claim 5, wherein the second communication network (132) comprises a second proxy server, a second connection server (325), a second query server (324) and the second subscriber data server (326); and wherein registering the second television set (120) in the second communication network (132) comprises entering the second telephone number (TEL2) in the second subscriber data server (326), in order to publish the second telephone number (TEL2) in the second communication network (132).

7. The method (500) according to Claim 6, wherein the registration comprises the following steps:
Transmitting a registration message (101) to the second proxy server via the second television set (120);
Locating of the second query server (324) by the second proxy server based on the registration message (101); and
Querying of the second subscriber data server (326) by the second query server (324) to determine the second connection server (325) associated with the second television set (120).

8. The method (500) according to Claim 7, comprising:
Detecting of the second connection server (325) by the second query server (324), if the second connection server (325) is associated with the second television set (120) within the second subscriber data server (326); and
Associating a new second connection server with the second television set (120) in the second subscriber data server (326) if the second connection server (325) is not associated with the second television set (120) in the second subscriber data server (326).

9. The method (500) according to Claim 8, wherein querying the second subscriber data server (326) for the second connection server (325) comprises the following steps:
Requesting (105a) authentication data from the second television set (120) via the second connection server (325) to receive the authentication data (106) from the second television set (120); and
Comparing the received authentication data (106) with authentication data stored in the second subscriber data server (326), wherein the registration is successful if the received authentication data matches the stored authentication data.

10. The method (500) according to any one of Claims 1 to 4, comprising:
Using the first proxy server (321) for receiving the connection request (201, 301) sent by the first television set (110) and determining whether the second television set (120) is registered in the first communication network (130);
Using the first proxy server (321) to forward the connection request (201) within the first communication network (130) if the second television set (120) is registered in the first communication network (130);
Using the first proxy server (321) for locating a second query server (324) in the second communication network (132) based on the connection request (301), and forwarding the connection request (301) to the second query server (324) if the second television set (120) is not registered in the first communication network (130); and
Using the first connection server (322) for receiving the connection request (301) forwarded by the first proxy server (321), and forwarding it to the second television set (120).

11. The method (500) according to Claim 10, comprising:
Using the second query server (324) for requesting the subscriber data from the second subscriber data server (326) based on the connection request (301), and, based on the subscriber data, determining a second connection server (325) which is associated with the second television set (120); and
Using the second connection server (325) for receiving the connection request (301) from the second proxy server (324), and forwarding it to the second television set (120).

12. A communication system for establishing a videoconferencing connection between a first television set (110) and a second television set (120), wherein the first television set (110) is associated with a first telephone number (TEL1) and the second television set (120) is associated with a second telephone number (TEL2), and wherein the first television set (110) is registered in a first communication network (130), comprising: a proxy server (321) designed to determine, based on a connection request (201, 301) transmitted by the first television set (110) with the second telephone number (TEL2), whether the second television set (120) is registered in the first communication network (130), and is designed to forward the connection request (201) to the second television set (120) if the second television set (120) is registered in the first communication network (130); wherein the proxy server (321) furthermore is designed to locate a second communication network (132) based on the connection request (301) and to forward the connection request (301) to the second communication network (132) if the second television set (120) is not registered in the first communication network (130); a subscriber data server (326); and a query server (324) designed to request subscriber data of the second television set (120) from the subscriber data server (326) based on the connection request (301), and to forward the connection request (301) to the second television set (120) if the second television set (120) is registered in the second communication network (130) based on the subscriber data of the second television set (120); wherein the subscriber data server (326) is designed to register the second television set (120) in the first communication network (130) by generating an entry of the second telephone number (TEL2) in the subscriber data server (326) in order to publish the second telephone number (TEL2) in the first communication network (130).

13. The communication system according to Claim 12, wherein the connection request (201, 301) is based on a Session Initiation Protocol (SIP) and wherein the proxy server (321) is designed to establish a connection to an Internet multimedia subsystem subscriber account.

## Revendications

1. Procédé (500) pour établir une connexion de vidéoconférence entre un premier téléviseur (110) et un second téléviseur (120), dans lequel le premier téléviseur (110) se voit attribuer un premier numéro de téléphone (TEL1) et le second téléviseur (120) se voit attribuer un second numéro de téléphone (TEL2), et dans lequel le premier téléviseur est enregistré dans un premier réseau de communication (130), comportant de:
émettre (501) une demande de connexion (201, 301) avec le second numéro de téléphone (TEL2) par l'intermédiaire du premier téléviseur (110) afin d'établir une connexion de communication avec le second téléviseur (120);
déterminer (502) si le second téléviseur (120) est enregistré dans le premier réseau de communication (130);
retransmettre (503, 202a, 203) la demande de connexion (201) au second téléviseur (120) et accepter la demande de connexion (201) par le second téléviseur (120) pour l'appel de visioconférence si le second téléviseur (120) est enregistré dans le premier réseau de communication (130); sinon:
localiser (504) un second réseau de communication (132) sur la base de la demande de connexion (301) et transmettre (304) la demande de connexion (301) au second réseau de communication (132);
demander (505) des données d'abonné du second téléviseur (120) à un second serveur de données d'abonné (326) dans le second réseau de communication (132) sur la base de la demande de connexion (301);
transférer (506, 306, 307) la demande de connexion (301) au second téléviseur (120) sur la base des données d'abonné du second téléviseur (120) et accepter la demande de connexion (301) par le second téléviseur (120) pour la vidéoconférence lorsque le second téléviseur (120) est enregistré dans le second réseau de communication (130); et
enregistrer le second téléviseur (120) dans le premier réseau de communication (130);
dans lequel le premier réseau de communication (130) comprend un premier serveur mandataire (121), un premier serveur de connexion (122), un premier serveur de requête (123) et un premier serveur de données d'abonné (124); et
dans lequel l'enregistrement du second téléviseur (120) dans le premier réseau de communication (130) comprend une entrée du second numéro de téléphone (TEL2) dans le premier serveur de données d'abonné (124) afin de faire connaître le second numéro de téléphone (TEL2) dans le premier réseau de communication (130).

2. Procédé (500) selon la revendication 1, dans lequel l'enregistrement comprend les étapes suivantes consistant à:
envoyer par le second téléviseur (120) un message d'enregistrement (101) au premier serveur mandataire (121);
localiser par le premier serveur mandataire (121) le premier serveur de requête (123) sur la base du message d'enregistrement (101); et
interroger le premier serveur de données d'abonné (124) par le premier serveur d'interrogation (123) le premier serveur de connexion (122) auquel le second téléviseur (120) est attribué.

3. Procédé (500) selon la revendication 2, comprenant de:
détecter par le premier serveur d'interrogation (123) le premier serveur de connexion (122) lorsque le premier serveur de connexion (122) est attribué au second téléviseur (120) dans le premier serveur de données d'abonné (124); et
attribuer un nouveau premier serveur de connexion au second téléviseur (120) dans le premier serveur de données d'abonné (124) si le premier serveur de connexion (122) n'est pas attribué au second téléviseur (120) dans le premier serveur de données d'abonné (124).

4. Procédé (500) selon la revendication 3,
dans lequel l'interrogation du premier serveur de données d'abonné (124) pour le premier serveur de connexion (122) comprend les étapes suivantes consistant à:
demander (105a) au second téléviseur (120) des données d'authentification par le premier serveur de connexion (122) afin de recevoir les données d'authentification (106) du second téléviseur (120); et
comparer les données d'authentification (106) obtenues des données d'authentification mémorisées dans avec le premier serveur de données d'abonné (124), dans lequel l'enregistrement est réussi si les données d'authentification reçues correspondent aux données d'authentification mémorisées.

5. Procédé (500) selon la revendication 1, comprenant de enregistrer le second téléviseur (120) dans le second réseau de communication (132).

6. Procédé (500) selon la revendication 5,
dans lequel le second réseau de communication (132) comprend un second serveur mandataire, un second serveur de connexion (325), un second serveur de requête (324) et le second serveur de données d'abonné (326); et
dans lequel l'enregistrement du second téléviseur (120) dans le second réseau de communication (132) comprend une entrée du second numéro de téléphone (TEL2) dans le second serveur de données d'abonné (326) afin de faire connaître le second numéro de téléphone (TEL2) dans le second réseau de communication (132).

7. Procédé (500) selon la revendication 6, dans lequel l'enregistrement comprend les étapes consistant à:
envoyer un message d'enregistrement (101) par le second téléviseur (120) au second serveur mandataire;
localiser par le second serveur mandataire le second serveur de requête (324) sur la base du message d'enregistrement (101); et
interroger le second serveur de données d'abonné (326) par le second serveur d'interrogation (324) afin de déterminer le second serveur de connexion (325) qui est attribué au second téléviseur (120).

8. Procédé (500) selon la revendication 7, comprenant de:
détecter par le second serveur de requête (324) le second serveur de connexion (325) lorsque le second serveur de connexion (325) est attribué au second téléviseur (120) dans le second serveur de données d'abonné (326); et
attribuer un nouveau second serveur de connexion au second téléviseur (120) dans le second serveur de données d'abonné (326) si le second serveur de connexion (325) n'est pas attribué au second téléviseur (120) dans le second serveur de données d'abonné (326).

9. Procédé (500) selon la revendication 8,
dans lequel l'interrogation du second serveur de données d'abonné (326) pour le second serveur de connexion (325) comprend les étapes suivantes consistant à:
demander (105a) au second téléviseur (120) des données d'authentification par le second serveur de connexion (325) afin de recevoir les données d'authentification (106) du second téléviseur (120); et
comparer les données d'authentification (106) obtenues avec les données d'authentification mémorisées dans le second serveur de données d'abonné (326), dans lequel l'enregistrement a réussi si les données d'authentification reçues correspondent aux données d'authentification mémorisées.

10. Procédé (500) selon une des revendications 1 à 4, comprenant de:
utiliser le premier serveur mandataire (321) pour recevoir du premier téléviseur (110) pour recevoir la demande de connexion envoyée (201, 301) et pour déterminer si le second téléviseur (120) est enregistré dans le premier réseau de communication (130);
utiliser le premier serveur mandataire (321) pour transmettre la demande de connexion (201) dans le premier réseau de communication (130) lorsque le second téléviseur (120) est enregistré dans le premier réseau de communication (130);
utiliser le premier serveur mandataire (321) pour trouver un second serveur de requête (324) dans le second réseau de communication (132) sur la base de la demande de connexion (301) et pour envoyer la demande de connexion (301) au second serveur de requête (324) lorsque le second téléviseur (120) n'est pas enregistré dans le premier réseau de communication (130); et
utiliser le premier serveur de connexion (322) pour recevoir la demande de connexion (301) transmise par le premier serveur mandataire (321) et la transmettre au second téléviseur (120).

11. Procédé (500) selon la revendication 10, comprenant de utiliser le second serveur de requête (324) pour interroger sur la base de la demande de connexion (301) les données d'abonné du second serveur de données d'abonné (326) et déterminer un second serveur de connexion (325), qui est attribué au second téléviseur (120), sur la base des données d'abonné; et
utiliser le second serveur de connexion (325) pour recevoir la demande de connexion (301) du second serveur de demande (324) et la transmettre au second téléviseur (120) .

12. Système de communication pour établir une connexion de vidéoconférence entre un premier téléviseur (110) et un second téléviseur (120), dans lequel le premier téléviseur (110) se voit attribuer un premier numéro de téléphone (TEL1) et le second téléviseur (120) se voit attribuer un second numéro de téléphone (TEL2), et dans lequel le premier téléviseur est enregistré dans un premier réseau de communication (130), comprenant :
un serveur mandataire (321), qui est conçu pour, sur la base d'une demande de connexion (201,301) émise par le premier téléviseur (110), déterminer avec le second numéro de téléphone (TEL2) si le second téléviseur (120) est enregistré dans la premier réseau de communication (130); et transmettre la demande de connexion (201) au second téléviseur (120) lorsque le second téléviseur (120) est enregistré dans le premier réseau de communication (130);
dans lequel le serveur mandataire (321) est en outre configuré pour trouver un second réseau de communication (132) sur la base de la demande de connexion (301) et transmettre la demande de connexion (301) au second réseau de communication (132) si le second téléviseur (120) n'est pas enregistré dans le premier réseau de communication (130);
un serveur de données d'abonné (326); et
un serveur d'interrogation (324), qui est configuré pour recevoir des données d'abonné du second téléviseur (120) sur la base de la demande de connexion (301) par le serveur de données d'abonné (326); et transmettre la demande de connexion (301) au second téléviseur (120) sur la base des données d'abonné du second téléviseur (120) lorsque le second téléviseur (120) est enregistré dans le second réseau de communication (130);
dans lequel le serveur de données d'abonné (326) est configuré pour enregistrer le second téléviseur (120) dans le premier réseau de communication (130) en générant une entrée du second numéro de téléphone (TEL2) dans le serveur de données d'abonné (326) afin de faire connaître le second numéro de téléphone (TEL2) dans le premier réseau de communication (130).

13. Système de communication selon la revendication 12, dans lequel la demande de connexion (201, 301) est basée sur un protocole d'initiation de session, SIP; et dans lequel le serveur mandataire (321) est conçu pour établir une connexion vers une ligne d'abonné du sous-système multimédia Internet.
